Europäisches Patentamt

European Patent Office

Office européen des brevets

(11) Publication number: **0 201 643**
**B1**

# EUROPEAN PATENT SPECIFICATION

(45) Date of publication of patent specification: **06.12.89**

(51) Int. Cl.⁴: **G 01 V 1/36**

(21) Application number: **85306853.4**

(22) Date of filing: **26.09.85**

(54) Seismic noise suppression.

(30) Priority: **06.05.85 US 731152**

(43) Date of publication of application:
**20.11.86 Bulletin 86/47**

(45) Publication of the grant of the patent:
**06.12.89 Bulletin 89/49**

(84) Designated Contracting States:
**BE DE FR GB NL SE**

(56) References cited:
**GB-A-1 208 424**
**US-A-3 638 175**

(73) Proprietor: **Western Atlas International, Inc.**
**10,001 Richmond Avenue**
**Houston Texas 77042 (US)**

(72) Inventor: **Gillooly, John F**
**8815 Belle Glen Drive**
**Houston Texas 77099 (US)**
Inventor: **Marschall, Richard A,**
**9323 Keegans Wood Drive**
**Houston Texas, 77083 (US)**

(74) Representative: **Godsill, John Kenneth et al**
**Haseltine Lake & Co. Hazlitt House 28**
**Southampton Buildings Chancery Lane**
**London WC2A 1AT (GB)**

**Description**

This invention is concerned with suppressing extraneous noise from seismic recordings. In particular it is concerned with suppressing signals due to shots generated by an independently operating seismic exploration crew.

In marine seismic exploration, a seismic ship tows a streamer cable including a plurality of seismic receivers such as hydrophones through a body of water. The streamer cable is generally towed at a desired depth beneath the water surface, such as 10 meters. Generally the streamer cables provide 96 or more data channels and may be three kilometers or more in length. As the ship proceeds along a line of survey, an acoustic source is triggered to produce an impulse at spaced-apart intervals of 25 to 50 meters. The acoustic waves from the impulse travel downwardly into the earth beneath the water. The waves are reflected from various earth layers back to the water surface where they are sensed by the receivers, converted to electrical signals as a function of total travel time, and recorded for future processing. A similar course of events takes places during land surveying, except of course, land vehicles replace ships.

Some areas of the world, such as the Gulf of Mexico, are heavily explored so that several seismic ships, working for unrelated operators may be conducting surveys at the same time. The receivers used in seismic streamer cables are quite sensitive as well as being omnidirectional. Any sound that the receiver hydrophones hear is detected and recorded. Thus, the receivers respond not only to an impulse or "shot" generated by their own ship, but may also respond to shots generated or fired by another ship. For any given ship, shots from other ships are necessarily coherent noise interference but generated at time intervals unrelated to those of the impulses of the given ship.

It is known of course, that the energy level of the first, direct water-arrivals from a shot may be 80 to 120 dB higher than the much weaker reflected arrivals that arrive several seconds later. It is also well known that the water volume between the water surface and the sea floor acts as an acoustic wave guide. Because of that phenomenon, the first direct signal arrivals from a ship as far as 50 to 100 kilometers distant may create a serious noise problem for some other ship. The problem of other-ship noise contamination is so serious that the respective operators within a given area allot daily time periods amongst themselves so that each operator can conduct his studies in comparative quite. Preferably a marine seismic crew operates 24 hours per day to maximize revenue time against fixed overhead. Any involuntary standby time is very costly.

Most classical seismic data processing methods involving noise suppression are based upon the assumption that ambient noise events on any given shot record are random and incoherent. The noise level is reduced by coherent "stacking" or summation after application of various well-known processes of common--midpoint processing and the like.

Other-ship noise is coherent. A single shot from another ship will contaminate all of the traces of an own-ship seismic record. Coherent noise is not amenable to conventional treatment. This invention addresses the problem of suppressing other-ship coherent noise. Proposals attempting to deal with coherent noise have been made, but are different from the invention and do not deal with other-ship noise. These proposals are US Patent 3,638,175 which discloses a method of reducing coherent noise originating in a recording device by summation of phase-reversed signals and U.K. Patent 1 208 424 which discloses a method for reducing coherent noise resulting from multiple reflections using a velocity (moveout) filter. Neither addresses itself to the suppression of other-ship coherent noise.

In accordance with a preferred aspect of this invention, a seismic ship successively generates seismic signals at a number of different shot locations along a line of survey. A spread of receivers, towed behind the ship, receive the refelected seismic signals at successively different receiver locations along the line. The respective receiver locations for each shot have a constant offset with respect to the shot locations. The receivers convert the received seismic signals to electrical signals as time-scale traces to form a plurality of common shot gathers. The shot gathers are reformatted as common receiver gathers, thereby reordering traces having coherent noise from some other sound source. The traces of the common receiver gathers are grouped by adjacent pairs. One trace of each pair is corrected for differential normal moveout relative to the other trace of the pair. The two traces of each pair are weighted in inverse proportion to the power of the received seismic signals on each trace and then are combined, such as by summing and normalizing to create a compressed common receiver gather.

In accordance with an aspect of this invention, the compressed common receiver gathers may be reformatted to a common midpoint gather.

In accordance with another aspect of this invention, the step of trace-pair weighting is carried out over a running time window having a preselected length prior to the steps of combining and reformatting.

In another aspect of this invention, the common receiver gathers are grouped as triplets, three traces group. Differential normal moveout is then applied to two of the traces to correct them to the third trace. Thereafter, the steps of weighting and combining are carried out as before.

A better understanding of the benefits and advantages of my invention may be obtained from the appended detailed description and the drawings, wherein:

Figure 1 illustrates a source of coherent noise originating from a rival ship;

Figure 2 shows schematically the progress of the surveying ship while engaged in continuous profiling;

Figure 3 is a synthetic record section showing a plurality of common shot gathers with a coherent noise burst on one record;

Figure 4 illustrates seismic ray paths involved in common shot gathers;

Figure 5 is an example of a common midpoint stack derived from the common shot gathers of Figure 3 using conventional processing;

Figure 6 illustrates the seismic ray paths associated with a common receiver gather at R1;

Figure 7 illustrates the seismic ray paths associated with a common receiver gather at R2;

Figure 8 is a record section of a common receiver gather as reformatted from the common shot gathers of Figure 3;

Figure 9 is a memory matrix suitable for reformatting common shot gathers to common receiver gathers, common midpoint gathers and common offset gathers;

Figure 10 is the extension of the two-dimensional matrix of Figure 9 into the time domain;

Figure 11 is a weighted, summed, and compressed common receiver gather created in conformance with the teachings of this invention; and

Figure 12 is a common midpoint stack derived from Figure 11.

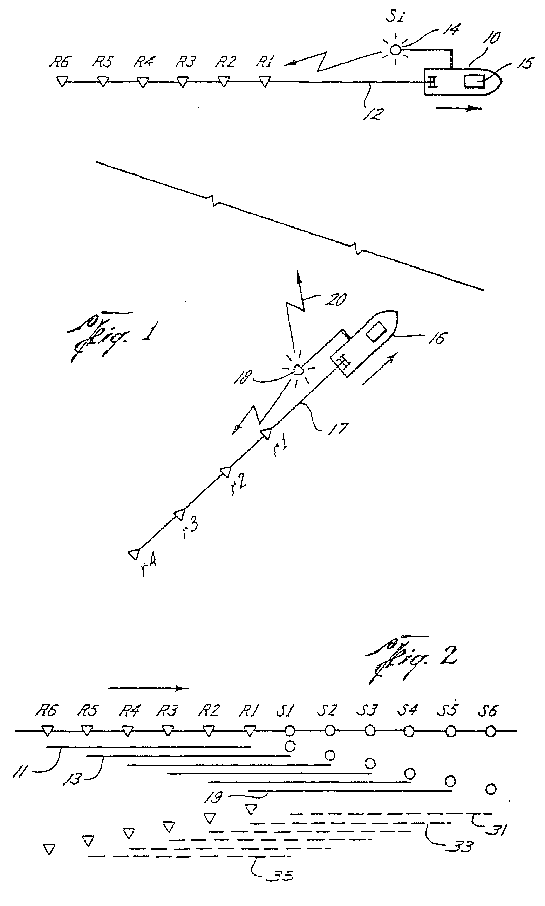

In Figure 1, there is shown in plan view, a seismic ship 10, towing a streamer cable 12, to which are secured a plurality of seismic signal receivers R1—R6. Six such receivers are shown, but a hundred or more may be used in practiice. A receiver array as shown is termed a receiver spread. Typically, the separation between receivers may be about 25 meters. A sound source 14 fires a shot at intervals along the line of survey at shot locations Si (i=1, 2, 3, ..., n) (Fig. 2); the interval between successive shot locations is an integral multiple of the receiver spacing. After each shot, during a listening period of six to eight seconds, the receivers sense seismic signals and convert the seismic signals to electrical signals which are transmitted by a transmission link in cable 12 to a data processor 15 in ship 10. The electrical signals are digitized at convenient sample intervals such as every 2 milliseconds (ms) and are stored for processing.

Another ship 16, which may be many kilometers away, is also towing a seismic cable 17 and receivers such as r1—r4 and a sound source 18. At intervals, ship 16 also fires a shot. The direct water-borne seismic signals 20 may reach receivers R1—R6 during ship 10's listening period to produce a coherent noise burst that interferes with desired signals. Since the operation of ship 16 is independent of the operations of ship 10, coherent noise contamination may occur at regular intervals unrelated to the operations of ship 10.

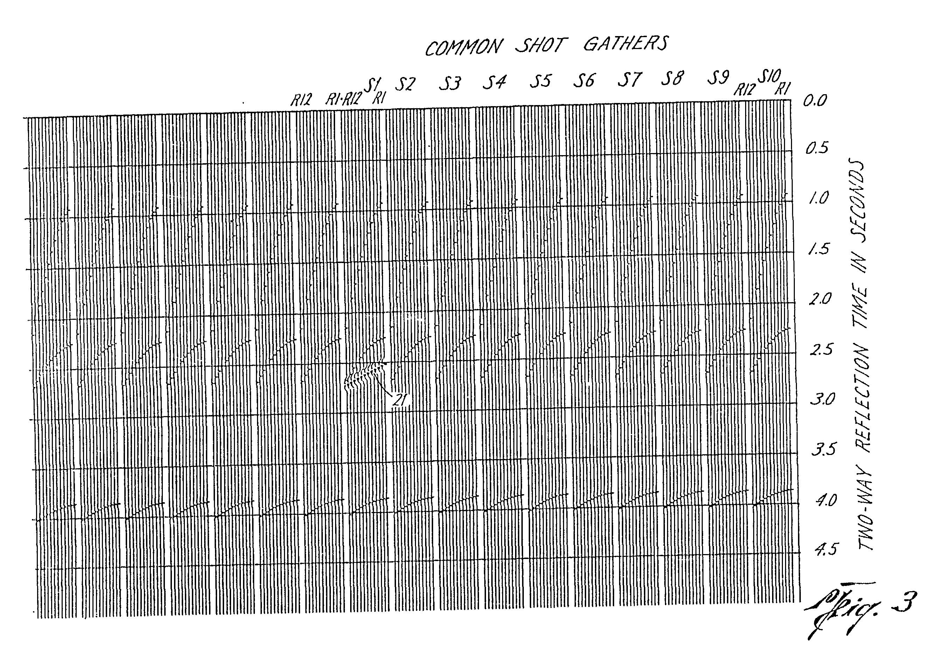

Figure 2 is a plan view of the progress of a continuous seismic profiling operation, beginning at one end of a line of survey. From Figure 1, we saw that the seismic cable 12 and receivers R1—R6 trail behind ship 10. At a shot location such as S1 the receivers, at receiver locations R1—R6 sense seismic signals over the surface coverage of the receiver spread represented by solid line 11. Observe that the receiver and shot spacings are equal. Customarily there is a gap between the shot location and the first receiver, of several receiver spacings. As ship 10 proceeds to the right along the line of survey to S2 the receiver spread trails along behind so that receivers R1—R6 now occupy locations S1—R5 as shown by solid line 13. When the ship reaches S6, the receiver spread R1—R6 occupies surface locations S5—R1, solid line 19. Of course, at each of the shot locations Si, a shot is fired and seismic reflection data are acquired at the corresponding receiver spread location. The significance of the dashed line coverage will be discussed later in connection with Figures 6 and 7.

Figure 3 is a synthetic seismic section of a series of seismic time-scale recordings that happen to have 12 traces per recording that correspond to a 12-receiver spread rather than the oversimplified 6-receiver spread in Figure 2. Each record constitutes a common shot gather that was shot and recorded from successively different shot locations, S1—S10, (analogous to Figure 2) and at different times during an operating day. Each record exhibits three reflections having two-way travel times of 0.9, 2.25, and 3.85 seconds, referred to the rightmost trace of each section. The reflections of Figure 3 are uncorrected for normal moveout (NMO). On record S1, a strong coherent noise burst 21, at 2.55 seconds, cuts across the record, interfering with the reflection at 2.25 seconds. That event is the coherent other-ship noise due to direct, water-borne seismic waves, symbolized as 20 in Figure 1. It is that noise that we wish to eliminate.

A number of the following paragraphs will be largely tutorial for the purpose of defining the principles and terminology used herein.

Figure 4 represents schematically an elevational view of seismic-signal ray paths or signal travel paths associated with six successively different shot locations S1—S6 and receiver locations R1—R6. The shot and receiver locations are at or near the surface 22 of a body of water 23 as shown at the upper half of Figure 2, solid line 11. A sub-bottom earth-layer reflecting surface 24 is shown.

From S1, a seismic signal propagates along a ray path S1-Ma-R1 where it is sensed by R1. Since the signal propagates by spherical spreading from S1, many other ray paths S1-Mb-R2 to S1-Mf-R6 are possible. The respective Ms are the ray-path midpoints which, for a 25-meter receiver spacing, are necessarily 12.5 meters apart. Each receiver provides a single time-scale trace on a seismic record as in Figure 3. As before stated, such a record is said to constitute a common shot gather associated with the bundle of raypaths 28. Other common shot gathers may be constructed for each of the other shot locations S2 to S6, of which only the common shot gather 30 is shown to avoid confusing the drawing.

Supposing that a shot location S0 and a receiver R0 are located at the same position as shown in Figure 4. The seismic signals travel along a vertical path 26 rather than an oblique path. The depth to the reflector 24 is simply one-half the total signal travel time multiplied by the average velocity of sound through the layered media between reflector 24 and the surface. From the drawing, it is clear that the total travel time along any of the oblique ray paths is longer than the two-way vertical ray path. The difference in total travel time due to angularity is defined as the normal moveout or NMO. NMO is a hyperbolic function proportional to the square of the offset (distance between shot and receiver) and inversely proportional to vertical travel time. The effect of NMO can be seen from the hyperbolic curvature of the respective reflections on the records of Figure 3. Differential NMO is simply the difference in travel time between any two ray paths.

Midpoint Ma is common to ray-paths, S1-Ma-R1, S6-Ma-R6, and S0-Ma-R0. If the travel times along the two oblique paths are corrected for NMO, they become equal to the vertical travel time S0-Ma-R0. The resulting three corrected seismic traces can now be summed to produce a three-fold common midpoint (CMP) stack or gather. A CMP gather is quite effective in cancelling random incoherent noise but it is ineffective in cancelling coherent noise. That effect is shown in Figure 5. The traces of each record of Figure 5 have been compressed to a six-fold CMP stack. Although most of the traces are clean, the traces involving record S1 are severely contaminated with noise.

From Figure 5, we see that a CMP stack is impotent against coherent noise. We therefore provide a technique to scramble or reorder coherent noise. Refer now to Figure 6. From Figure 4, we learned that each receiver senses seismic signals from several different shot locations. For example, R1 receives signals from the successively different shot locations S1—S6 and at successively different points in time. Therefore, it is possible to reformat the common shot gathers to a common receiver gather for R1 as indicated by ray-path bundle 32. Similarly, we can produce a common receiver-trace gather 34 for R2, Figure 7. In Figure 6, the distance or offset between R1 and S6 is the same as the offset between R2 and S5. The process of interchanging shot location and receiver location is valid because of the well-known reciprocity principle. That is, the signal travel path from S1 to R1, for example is exactly the same as the travel path from R1 to S1.

Referring back to Figure 2, the dashed lines represent the common receiver gathers that were derived from the common shot gathers shown by the solid lines at the upper portion of Figure 2. Thus common receiver gather R1 is represented by the surface coverage of dashed line 31, Figure 2 and ray paths 32 of Figure 6. Common receiver gather R2 includes the surface coverage of dashed line 33, Figure 2 and ray paths 34 of Figure 7. The construction of common receiver gathers continues to R6, dashed line 35, covering shots made at locations R5—S1.

Figure 8 illustrates the common shot gathers of Figure 3 reformatted as common receiver gathers R1—R12. The coherent noise that contaminated the entire recording of common shot gather S1 has now been redistributed to appear only on one trace of each common receiver gather. Thus, on receiver gather R1, the noise appears on trace 1, the rightmost trace, which corresponds to the first trace of S1. At R2, the noise appears on trace 2 which corresponds to trace 2 of S1 (see also Figures 2, 6, 7).

Thus we have produced a series of common receiver-trace gathers wherein the traces having coherent noise have been reordered with respect to their nearest adjacent neighboring traces. We can now use information from the nearest neighboring adjacent trace to repair or replace the noise burst of a contaminated trace.

The step of reformatting is most easily carried out by use of an addressable memory matrix. The extent of the matrix in Figure 9 is limited to a 6×6 array for purposes of example. In practice the extent of the matrix would be expanded to include all possible shot/receiver combinations as required to accommodate the required number of shot locations along the line and receivers along the spread. Refer to Figure 9. For any given signal travel-time increment, the shot locations are addressed by rows and the receivers associated with any shot location are addressed by columns. Thus for a common shot gather from S6 the signal samples sensed by receivers R1—R6 are stored in memory cells along column S6 as shown by dashed line 40. Common receiver gathers may be constructed by extracting data samples along a row. For example, a common receiver gather for R2 is constructed by extracting data samples from cells along dashed line 42. The data may be reformatted as a CMP gather by extracting data samples from cells lying along any diagonal line parallel to dashed line 44. Thus, a data sample that propagated from S1 to R1 has the same ray-path midpoint Ma as a data sample that propagated from S6 to R6 (refer back to Figure 4). A diagonal line such as 46 identifies those data samples that propagated along ray paths that have a common shot/receiver offset.

The matrix of Figure 9 is two dimensional. Because seismic traces are time-scale recordings, a time axis T, mutually orthogonal to the Si and Rj axes must be added as in Figure 10. The time axis T may be expressed in terms of incremental sample counts for any given signal-sampling rate. It is convenient to process seismic signals within a time window such as $t_2-t_1$ where the length of the window may be on the order of 150 to 200 ms or 75 to 100 samples at a 2-ms sample rate.

Following the step of reformatting from common shot gathers to common receiver gathers, the traces are grouped by adjacent pairs. For example, referring to Figure 6, traces corresponding to ray paths R1-Ma-S1 and R1-Mg-S2 forms one adjacent-trace pair, R1-Mh-S3 and R1-Mi-S4 form another adjacent-trace pair, and similarly for the other traces. One trace of each pair is then corrected for differential NMO so that the two traces later can be summed. The differential NMO need be only an estimate of the true value. If the reflector 24 does not dip steeply and the subsurface midpoints are close together (12.5 meters), the traces could be grouped by triplets with the estimated differential NMO being applied to two of the traces to correct them to the third trace. For deeper portions of a time-scale recording the differential moveout becomes very small so that differential NMO may be eliminated.

Upon completion of the steps of reformatting, grouping, and correcting for differential NMO, the two traces of each pair (or the three traces of each triplet) are weighted in inverse proportion to the RMS signal power level. Any one of a number of known statistical weighting schemes may be used. For example, let

$$P(t) = (I/n) \sum_{i=1}^{i=n} A^2 i(t),$$

where

$P(t)$ is the signal power level at time $t$,

$A_i(t)$ is the signal amplitude level at each sample time $t_i$,

$$i = (1, 2, 3, \ldots, n)$$

and

$n$ is the number of samples embraced within a selected time window $t_2 - t_1$.

Then a time-varying output-trace weighting factor $O(t)$ for a sample within the time window $t_2 - t_1$ is

$$O(t) = A(t)/P(t).$$

The time-window length is chosen to bracket the coherent noise bursts as seen on the original common shot-trace gather. For the case of Figure 3, the time window length would be about 200 ms. The weighting factor $O(t)$ is defined over a running time window. That is, successive output-trace weighting factors are determined for successive data samples from a running average of the data samples within that time window $t_2 - t_1$ that is centered around the data sample $t_i$ under consideration.

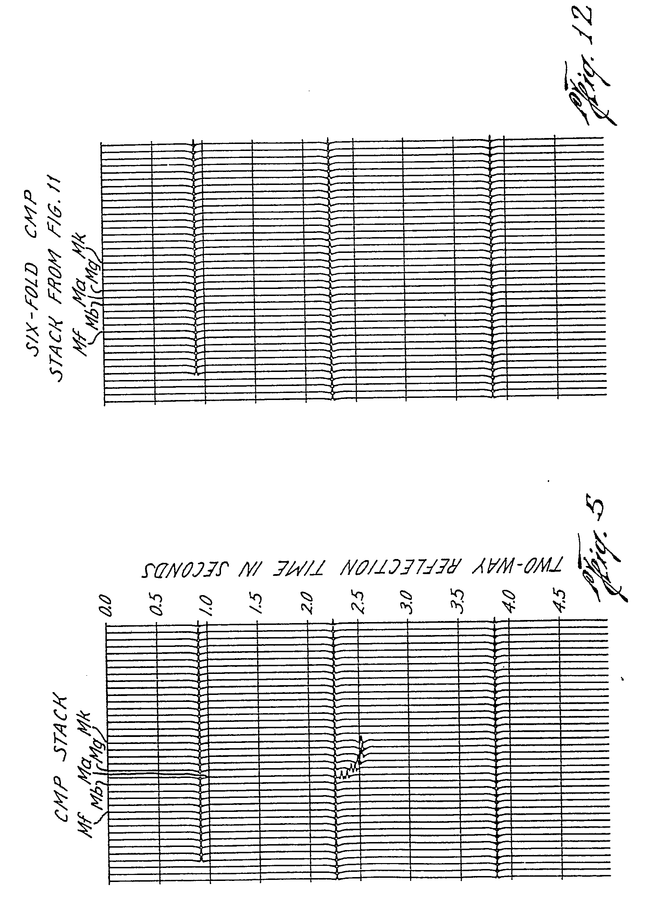

After weighting, the two adjacent traces of each pair are combined, such as by summing and normalizing, to generate a set of twelve, 6-trace, common receiver gathers as shown in Figure 11, wherein the coherent noise has been successfully suppressed to a level so small as to be insignificant. The shallow reflections at 0.9 second have been muted on the leftmost three traces. For a relatively shallow reflection, the differential NMO is very large. Application of differential NMO severely distorts the waveform such that a valid summation is not possible. Hence the need for muting reflected events for shallow reflections at long offsets. Adjacent-trace summing may be replaced by a running average of two or three traces provided suitable NMO corrections are made.

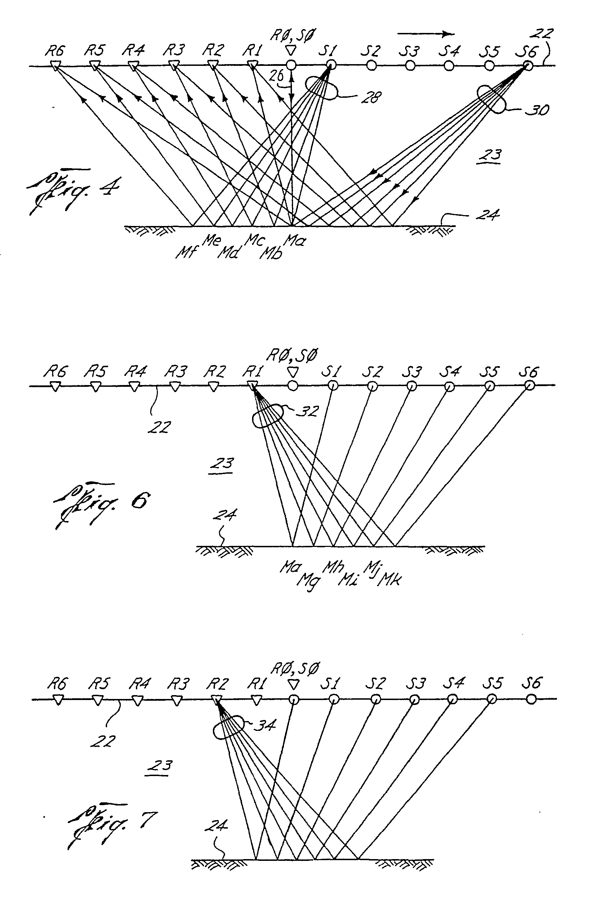

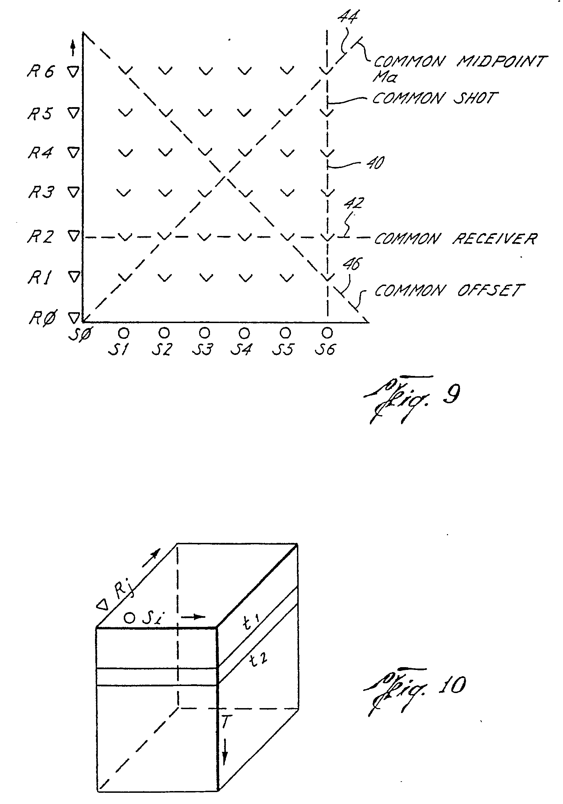

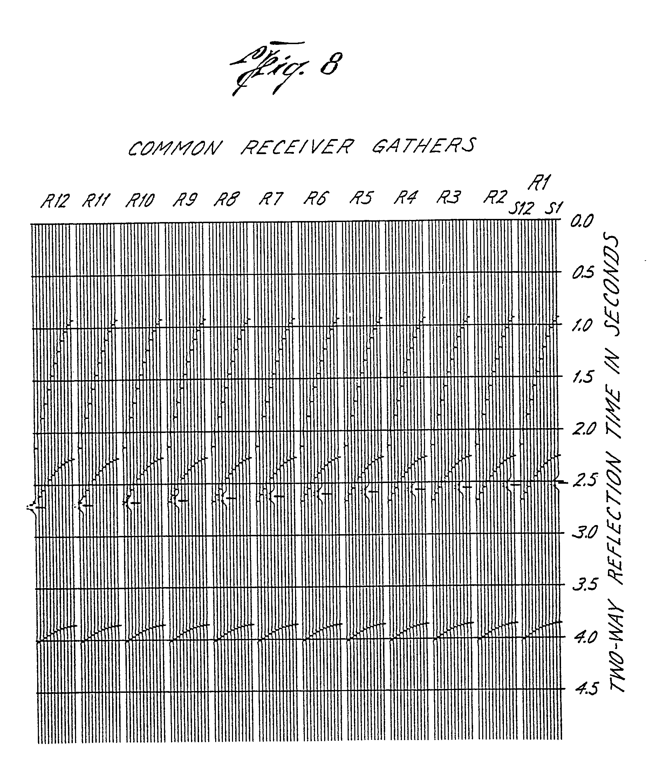

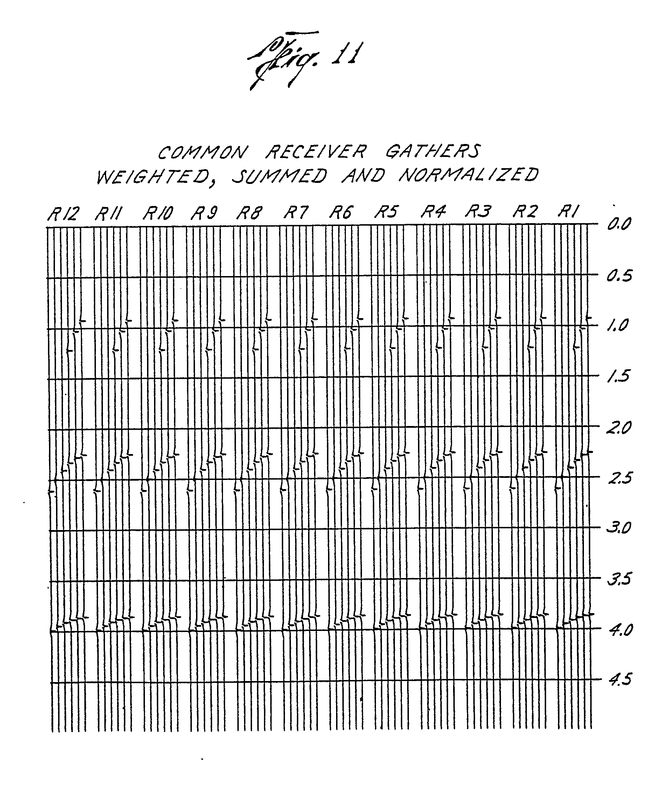

The compressed common receiver gathers of Figure 11 are preferably reformatted and displayed as a visual CMP stacked, time-scale recording as in Figure 12, preparatory to further conventional data processing. The coherent-noise-suppressed CMP stack of Figure 12, derived from common receiver gathers may be contrasted with the CMP stack of Figure 5 that was derived from common shot gathers, to appreciate the beneficial results to be had from the practice of my invention. We have thus converted coherent-noise-contaminated raw seismic data into new, coherent-noise suppressed seismic traces.

To summarize the preferred mode of operation then, we suppress coherent noise contaminations on seismic data by scrambling or reordering the noise as observed on common shot gathers. Reordering is accomplished by first reformatting the common shot gathers as common receiver gathers. Adjacent traces of the common receiver gathers are grouped by pairs and the required differential NMO is applied to one trace of each pair to correct that trace to the adjacent neighboring trace. A time-varying statistical weighing factor, inversely proportional to the RMS signal power level is applied to the traces. The weighted traces are then combined as by summation and normalization. The summed and normalized adjacent traces may then be reformatted as CMP stacks or in any other format for further processing.

For illustrative purposes, our invention has been described with a certain degree of specificity. Variations will occur to those skilled in the art but this invention is limited by the appended claims. In particular we have used a marine environment for purposes of example. Our method will function equally well with data acquired on land. The invention has been described with reference to digital data-gathering seismic systems. The method may be easily adapted for use with a pure analog system as well.

It will be appreciated that the processing steps referred to above may be carried out by suitable purpose built digital processing units, or by a suitably programmed computer.

## Claims

1. A method for suppressing coherent-noise contamination of seismic signals which consists of generating seismic signals (14) and receiving said seismic signals ($R_1$—$R_6$) formatted as time-scale traces, arranged as a plurality of common shot gathers (11, 13, 19) characterized by reordering the coherent noise contamination by reformatting said plurality of common shot gathers (11, 13, 19) as a plurality of common receiver gathers (31, 33, 35); weighting the respective time-scale traces of said plurality of common receiver gathers (31, 33, 35) in inverse relation to the seismic signal power level; combining preselected groups of the respective weighted traces; and producing a new time-scale recording of coherent-noise-suppressed seismic traces.

2. The method as defined by claim 1, further comprising the steps of grouping the respective traces of the common receiver gathers (31, 33, 35) by pairs; and applying an estimated differential normal moveout to one trace of each pair prior to applying the steps of weighting and summing.

3. The method as defined by claim 1 further comprising the steps of grouping the respective traces of the common receiver gathers (31, 33, 35) by triplets and applying an estimated differential normal moveout to two traces of each triplet prior to applying the steps of weighting and summing.

4. The method as defined by claims 1 to 2, wherein the step of weighting is applied to the respective time-scale traces of said plurality of common receiver gathers (31, 33, 35) over a running time window having a preselected length.

5. The method as defined by claim 4 wherein said seismic signals are generated at a plurality of successively different shot locations (Si) and are received at a plurality of successively different receiver ($R_1$—$R_6$) locations that have a constant offset relative to the respective shot locations.

6. The method as defined by claim 5 wherein the step of combining includes the steps of summing and normalizing said preselected groups of respective weighted traces to produce a compressed common receiver gather.

7. The method as defined by claim 6 including the further step of reformatting said compressed common receiver gather as common midpoint stack.

8. Apparatus for suppressing coherent-noise contamination of seismic signals formatted as time-scale traces, arranged as a plurality of common shot gathers (11, 13, 19), the apparatus comprising: means for reformatting said plurality of common shot gathers as a plurality of common receiver gathers (31, 33, 35); means for weighting the respective time-scale traces of said plurality of common receiver gathers an inverse relation to the seismic signal power level; means for combining preselected groups of the respective weighted traces; and means for producing a new time-scale recording of coherent-noise--suppressed seismic traces.

**Patentansprüche**

1. Verfahren zur Unterdrückung von durch Kohärenzrauschen hervorgerufenen Störungen seismischer Signale mit den Verfahrensschritten:
—Erzeugen von seismischen Signalen (14), und
—Empfangen der spurweise im Zeitbereich formatierten seismischen Signalen ($R_1$—$R_6$), die als eine Vielzahl von aus einem Schallereignis resultierenden Signalanhäufungen (11, 13, 19) angeordnet sind, gekennzeichnet durch:
—Umsortieren der durch das Kohärenzrau-

schen hervorgerufenen Störungen durch Reformatieren der Vielzahl aus dem Schallereignis resultierenden Signalanhäufungen (11, 13, 19) zu einer Vielzahl von gemeinsamen empfängerseitigen Signalanhäufungen (31, 33, 35),
—Gewichten der entsprechenden Zeitbereichs-Spuren der Vielzahl der empfängerseitigen Signalanhäufungen (31, 33, 35) im umgekehrten Verhältnis zum Leistungspegel der seismischen Signale,
—Kombinieren vorgewählter Gruppen der entsprechenden, gewichteten Spuren und
—Erzeugen einer Aufnahme von seismischen Spuren mit neuem Zeitbereich, bei denen die Durch Kohärenzrauschen hervogerufenen Störungen unterdrückt sind.

2. Verfahren nach Anspruch 1, mit den weiteren Verfahrensschritten:
—paarweises Gruppieren der entsprechenden Spuren der empfängerseitigen Signalanhäufungen (31, 33, 35) und
—Anwenden eines geschätzten differenziellen Laufzeitunterschieds auf eine Spur eines jeden Paares vor den Verfahrensschritten Gewichten und Aufsummieren.

3. Verfahren nach Anspruch 1, mit den weiteren Verfahrensschritten:
—Gruppieren der entsprechenden Spuren der Signalanhäufungen (31, 33, 35) an dem Empfängen zu Tripeln, und
—Anwenden eines geschätzten differenziellen Laufzeitunterschieds auf zwei Spuren eines jeden Tripels vor den Verfahrensschritten Gewichten und Aufsummieren.

4. Verfahren nach Anspruch 1 oder 2, bei dem der Verfahrensschritt Gewichten auf die entsprechenden Zeitbereichs-Spuren der Vielzahl von Signalanhäufungen (31, 33, 35) an den Empfängern während eines Laufzeitfensters von ausgewählter Länge angewandt wird.

5. Verfahren nach Anspruch 4, bei dem die seismischen Signale an einer Vielzahl aufeinander folgender, unterschiedlicher Schallereignisorte (Si) erzeugt werden und an einer Vielzahl aufeinander folgender, unterschiedlicher Empfangsorte (R1—R6), die einen konstanten Versatz im Verhältnis zu den Schallereignisorten aufweisen, empfangen werden.

6. Verfahren nach Anspruch 5, bei dem der Verfahrensschritt Kombinieren die Verfahrensschritte Aufsummieren und Normieren der vorgewählten Gruppen der entsprechenden, gewichteten Spuren umfaßt zur Erzeugung einer komprimierten Signalanhäufung an dem Empfängern.

7. Verfahren nach Anspruch 6, mit dem weiteren Verfahrensschritt:
—Reformatieren der komprimierten Signalanhäufung an den Empfängern zu einer gemeinsamen Mittelpunkt-Signalanhäufung.

8. Vorrichtung zur Unterdrückung von durch Kohärenzrauschen hervorgerufenen Störungen von spurweise im Zeitbereich formatierten seismischen Signallen, die als eine Vielzahl von aus einem Schallereignis resultierenden Signalanhäufungen (11, 13, 19) angeordnet sind, mit:

—Einrichtungen zum Reformatieren der Vielzahl von aus dem Schallereignis resultierender Signalanhäufungen zu einer Vielzahl von gemeinsamen Signalanhäufungen (31, 33, 35) an den Empfängern,

—Einrichtungen zum Gewichten der entsprechenden Zeitbereichs-Spuren der Vielzahl der empfängerseitigen Signalanhäufungen in einem zum Leistungspegel de seismischen Signale umgekehrten Verhältnis,

—Einrichtungen zum Kombinieren vorgewählter Gruppen der entsprechenden, gewichteten Spuren, und

—Einrichtungen zur Erzeugung einer Aufnahme von seismischen Spuren mit neuem Zeitbereich und unterdrücktem Kohärenzrauschen.

**Revendications**

1. Procédé pour supprimer l'altération, due à un parasitage cohérent, de signaux sismiques, consistant à produire des signaux sismiques (14) et à recevoir lesdits signaux sismiques ($R_1$—$R_6$) formatés sous la forme de tracés en fonction du temps, disposés sous la forme d'une pluralité d'ensembles de tirs communs (11, 13, 19), caractérisé par l'enregistrement de l'altération par le parasitage cohérent, par reformatage de ladite pluralité d'ensembles de tirs communs (11, 13, 19) sous la forme d'une pluralité d'ensembles de récepteurs communs (31, 33, 35); la pondération des tracés respectifs en fonction du temps, de ladite pluralité d'ensembles de récepteurs communs (31, 33, 35) en rapport inverse avec le niveau d'énergie du signal sismique; la combinaison de groupes présélectionnés de tracés respectifs pondérés; et la production d'un nouvel enregistrement, en fonction du temps, de tracés sismiques, dont le parasitage cohérent est supprimé.

2. Procédé défini selon la revendication 1, incluant en outre les étapes consistant à regrouper les tracés respectifs des ensembles de récepteurs communs (31, 33, 35) par couples; et à appliquer un décalage normal différentiel estimé à un tracé de chaque couple avant de mettre en oeuvre les étapes de pondération et de sommation.

3. Procédé selon la revendication 1, incluant en outre les étapes consistant à regrouper les tracés respectifs des ensembles de récepteurs communs (31, 33, 35) selon des triplets et à appliquer un décalage normal différentiel estimé à deux tracés de chaque triplet avant de mettre en oeuvre les étapes de pondération et de sommation.

4. Procédé selon la revendication 1 ou 2, selon lequel l'étape de pondération est appliquée aux tracés respectifs en fonction du temps, de ladite pluralité d'ensembles de récepteurs communs (31, 33, 35) pendant une fenêtre temporelle en cours, possédant une durée présélectionnée.

5. Procédé selon la revendication 4, selon lequel lesdits signaux sismiques sont produits au niveau d'une pluralité d'emplacements de tirs (Si) successivement différents et sont reçus au niveau d'une pluralité d'emplacements successivement différents de récepteurs ($R_1$—$R_6$), qui présentent un décalage constant par rapport aux emplacements respectifs des tirs.

6. Procédé selon la revendication 5, selon lequel l'étape de combinaison inclut les étapes de sommation et de normalisation desdits groupes présélectionnés de tracés pondérés respectifs pour l'obtention d'un ensemble comprimé de récepteurs communs.

7. Procédé selon la revendication 6, incluant l'étape supplémentaire consistant à reformater l'ensemble comprimé de récepteurs communs sous la forme d'une pile commune de points médians.

8. Dispositif pour supprimer l'altération, due à un parasitage cohérent, de signaux sismiques formatés sous la forme de tracés en fonction du temps, disposés sous la forme d'une pluralité d'ensembles de tirs communs (11, 13, 19), ce dispositif comprenant: des moyens pour reformater ladite pluralité d'ensembles de tirs communs sous la forme d'une pluralité d'ensembles de récepteurs communs (31, 33, 35); des moyens pour pondérer les tracés respectifs, en fonction du temps, de ladite pluralité d'ensembles de récepteurs communs, en rapport inverse du niveau d'énergie du signal sismique; des moyens pour combiner des groupes présélectionnés des tracés pondérés respectifs; et des moyens pour produire un nouvel enregistrement fonction du temps, de tracés sismiques, dont le parasitage cohérent est supprimé.

Fig. 1

Fig. 2

Fig. 3

TWO-WAY REFLECTION TIME IN SECONDS

0.0 0.5 1.0 1.5 2.0 2.5 3.0 3.5 4.0 4.5

COMMON SHOT GATHERS

R12 R1·R12 S1 R1 S2 S3 S4 S5 S6 S7 S8 S9 R12 S10 R1

21

SIX-FOLD CMP
STACK FROM FIG.11

Mf Mb Ma Mg Mk

Fig. 12

CMP STACK

Mf Mb Ma Mg Mk

TWO-WAY REFLECTION TIME IN SECONDS

0.0 0.5 1.0 1.5 2.0 2.5 3.0 3.5 4.0 4.5

Fig. 5

R6  R5  R4  R3  R2  R1  RØ,SØ  S1  S2  S3  S4  S5  S6  22

26  28  30  23  24

Fig. 4

Mf  Me  Md  Mc  Mb  Ma

R6  R5  R4  R3  R2  R1  RØ,SØ  S1  S2  S3  S4  S5  S6

22  32  23  24

Fig. 6

Ma  Mg  Mh  Mi  Mj  Mk

R6  R5  R4  R3  R2  R1  RØ,SØ  S1  S2  S3  S4  S5  S6

22  34  23  24

Fig. 7

4

R6 ▽

R5 ▽

R4 ▽

R3 ▽

R2 ▽

R1 ▽

R∅ ▽

S∅  S1  S2  S3  S4  S5  S6

44 COMMON MIDPOINT
Ma

COMMON SHOT

40

42 COMMON RECEIVER

46 COMMON OFFSET

Fig. 9

△ Rj
○ Si
t₁
t₂
T

Fig. 10

5

*Fig.* 8

COMMON RECEIVER GATHERS

*Fig. 11*

COMMON RECEIVER GATHERS
WEIGHTED, SUMMED AND NORMALIZED